**Europäisches Patentamt**

**European Patent Office**

**Office européen des brevets**

(19)

(11) Veröffentlichungsnummer: **0 021 233**
**B1**

(12) # EUROPÄISCHE PATENTSCHRIFT

(45) Veröffentlichungstag der Patentschrift: 04.05.83

(21) Anmeldenummer: **80103221.0**

(22) Anmeldetag: **11.06.80**

(51) Int. Cl.³: **E 21 F 13/04,** B 65 G 11/16

(54) Spiralrutsche, insbesondere in einem Bergefallrohr.

(30) Priorität: **13.06.79 DE 2923945**

(43) Veröffentlichungstag der Anmeldung:
**07.01.81 Patentblatt 81/1**

(45) Bekanntmachung des Hinweises auf die Patenterteilung:
**04.05.83 Patentblatt 83/18**

(84) Benannte Vertragsstaaten:
**BE DE FR GB**

(56) Entgegenhaltungen:
**DE-B-1 608 293**
**DE-B-2 160 636**
**DE-B-2 310 875**

(73) Patentinhaber: **Schmelzbasaltwerk Kalenborn Dr.Ing. Mauritz KG, D-5461 Kalenborn bei Linz/Rhein (DE)**

(72) Erfinder: **Krambo, Peter, Im Altreusch 3, D-5466 Neustadt/Wied (DE)**
Erfinder: **Grüber, Alfons, Beethovenstrasse 48, D-5460 Linz/Rhein (DE)**

(74) Vertreter: **Lewald, Dietrich, Dipl.-Ing., Birnauer Strasse 6, D-8000 München 40 (DE)**

EP 0 021 233 B1

Spiralrutsche, insbesondere in einem Bergefallrohr

Die Erfindung betrifft eine Spiralrutsche, insbesondere in einem Bergefallrohr, bestehend aus einzelnen Rohrstücken mit verschleißfester Auskleidung aus Hartgußwendelauflageplatten.

Es ist bekannt, durch ein Stahlrohr von etwa 500 mm Innendurchmesser länge einer steilen Spirale aus Stahlblech mit hierauf aufgeschraubten Hartgußwendelauflagen Berge durch Gravitation zu fördern. Eingesetzt werden diese sog. Bergefallrohre in Schächten von Steinkohlenbergwerken zur Abförderung von Übertage in der Wäsche anfallenden Bergen nach Untertage, zum Versatz der Berge, beispielsweise zum Füllen des »toten Manns«.

Aus den DE-B-1 608 293 ist eine Wendelrutsche für den Bergbau mit innerhalb eines zylindrischen Mantelblechs spiralförmig angeordneten Halteblechen bekanntgeworden, auf denen aus verschleißfesten Gußmaterialien hergestellte Schleißplatten aufliegen, an deren oberen Stirnkanten sich Mantelschutzbleche anschließen, die unmittelbar am Mantel befestigt sind. Die lose auf den Halteblechen aufliegenden Schleißplatten sind an ihrer Unterkante jeweils etwa in ihrer Mitte von Klemmstücken erfaßt, die an den Halteblechen angebracht etwa parallel zu den Schleißplatten wirkend diese einspannen. Die Wendelauflageplatten sind also an den Halteblechen befestigt, wobei ein Abschluß über Mantelschutzbleche erfolgt.

Demgegenüber liegt der Erfindung die Aufgabe zugrunde, die Befestigung der Hartgußwendelauflageplatten der Spiralrutschen einfacher und weniger aufwendig und bei geringerer Beanspruchung für die Befestigungsschrauben zu gestalten. Bisher war in solchen Bergefallrohren oder Wendelrutschen eine Leitspirale aus Stahl vorgesehen. Gegen diese Leitspirale waren die Wendelauflagen verschraubt. Eine gesonderte Leitspirale ist aufwendig. Aufgrund der notwendigen Verformung läßt sie sich auch nur mangelhaft gegen Korrosion schützen und mußte deshalb von Zeit zu Zeit erneuert werden. Auch konnten die Muttern bei der Verschraubung durch die Verschleißauflage in der üblichen Konstruktion nur unter großen Mühen erreicht werden. Das schwierige Lösen der Schrauben von der Stahlblechunterkonstruktion führte dazu, daß die Schrauben abgeschlagen werden mußten und daß die Stahlblechunterkonstruktion praktisch nach jeder Reparatur mehr oder weniger stark beschädigt war und somit nach zwei Auswechslungen ebenfalls erneuert werden mußte.

Die oben beschriebene Aufgabe löst man gemäß der Erfindung überraschend durch Anbringung der Hartgußwendelauflageplatten freihängend unmittelbar am Stahlmantelrohr.

Zweckmäßig sind die Schrauben oben an der Hartgußauflageplatte freitragend außerhalb der Hauptverschleißzone gegen das Mantelrohr verschraubt.

Günstig ist es, wenn am Mantelrohr oberhalb der jeweiligen Wendelauflageplatte Mantelschutzplatten aufgehängt sind.

In Weiterbildung der Erfindung läßt sich die Hartgußwendelauflageplatte dadurch besonders einfach anbringen, daß sie entfernbare bzw. in der Höhe korrigierbare Korrigiernocken an einem angegossenen Fuß zur Abstützung gegen die Stahlwand aufweist. Im Bereich zwischen Verschleißschutzauflage und Mantel können zusätzliche entfernbare Korrekturnocken an der Auflage angeordnet sein. Dies erfolgt im allgemeinen an der Stelle, wo die Hartgußwendelauflageplatte beginnt, sich von der senkrechten Stahlwand nach innen fortzukrümmen.

Nach einer Weiterbildungsform der Erfindung sind im Bereich der überlappenden Querfuge der Wendelauflage in Förderrichtung an der anderen Stoßstelle unteren Platte Zentriernocken angegossen.

Durch die Maßnahme nach der Erfindung der freien Aufhängung der die Spiralrutsche bildenden Platten — an zwei Schrauben — fällte die gesamte bisher als notwendig erachtete Stahlblechunterkonstruktion (Leitspirale) sowie die Verschraubungen im verschleißungünstigen Bereich fort. Durch diese Art der Verschraubung wirkt auch ein wesentlich verringertes Moment auf die Verschleißschutzauflage und den Stahlmantel ein. Die Schrauben können sich nicht durch unzulässige Drehung lockern; ein Aufreißen und Zerreißen, wie dies noch bisher bei Konstruktionen mit einer einzelnen Schraube auftrat, entfällt.

Wie in der DE-A-23 51 772 beschrieben, können die Wendelauflageplatten auch weiterhin mit verstärkter Kehle im Hauptverschleißbereich ausgeführt sein.

Besonders günstig ist es, wenn die Verschleißschutzauflageplatten aus hochchromlegiertem schlagzähem Material mit hohem Verschleißwiderstand bestehen. Die Maßnahme nach der Erfindung besteht in einer reparaturfreundlichen Auflage mit angegossenem Fuß und Korrekturnocken. Diese Nocken können bei der Montage abgeschlagen oder in ihrer Höhe korrigiert werden, was sich Untertage am Einbauort mit einfachsten Werkzeugen durchführen läßt. Das Abschlagen der Korrekturnocken wird aufgrund ihrer partiellen Härtung möglich.

Die Wendelauflage hat im übrigen eine Linienführung zum sog. Wendelauge, die nach einer quadratischen Funktion, also nicht einfach abgerundet, ausgeführt ist.

Die Wendelauflageplatten können auch in Förderrichtung sich überlappende Fugen aufweisen. Hierbei ist an der Unterseite der überlappenden Fugen mindestens ein Zentriernocken vorgesehen. Dieser Zentriernocken kann bei Auswechslung der Platten aufgrund der partiellen Härtung an der Soll-Bruchstelle abgeschlagen werden.

Das stoßfreie Einbauen der Wendelauflageplatten wird hierdurch unterstützt.

Die Wendelauflageplatten nach der Erfindung mit angegossenem Fuß werden gehärtet und angelassen bis zu einer Vivkershärte von wenigstens 650 HV 30. Im Bereich der vorstehenden Kante, die weniger auf Verschleiß als auf Schlag beansprucht ist, wird durch partielle Wärmebehandlung eine höhere Schlagfestigkeit zum Schutz gegen Bruch erreicht.

Bei den Verschraubungen der Verschleißauflagen in der bisher gebräuchlichen Ausführung durch das Stahlblech konnten die Muttern dieser Verschraubungen nur unter großen Mühen erreicht werden. Bei der Konstruktion nach der Erfindung läßt sich die Schraube von außen leicht lösen. Das schwierige Lösen der Schrauben auf der Stahlblechspiralkonstruktion dagegen führte dazu, daß die Schrauben abgeschlagen werden mußten und daß die Stahlblechunterkonstruktion (Leitspirale) praktisch nach jeder Reparatur mehr oder weniger stark beschädigt war und ebenfalls ausgewechselt werden mußte.

Da die Wendelauflageplatten an dem zylindrischen Mantelrohr durch Schrauben befestigen werden und frei in dem zylindrischen Rohr hängen, entlastet der angegossene Fuß, der sich gegen den zylindrischen Stahlmantel abstützt, die Schrauben.

Das Anwendungsgebiet der Erfindung liegt nicht nur bei Bergefallrohren, sondern auch bei Schachtwendelrutschen und ist natürlich auch dort einsetzbar, wo ähnliche Probleme auftreten. Ein Mörtelbett für die Verschleißauflageplatten ist in keinem Fall erforderlich. Die Schrauben sind immer nur auf Abscheren beansprucht.

Anstatt der geschilderten Ausführungsform eines Fußes ist es auch möglich, am Übergangsbereich zwischen geradem Stahlrohr und Auflageplatte eine stegartige Rippe beginnen zu lassen, die z. B. über die halbe Plattentiefe nach unten reicht.

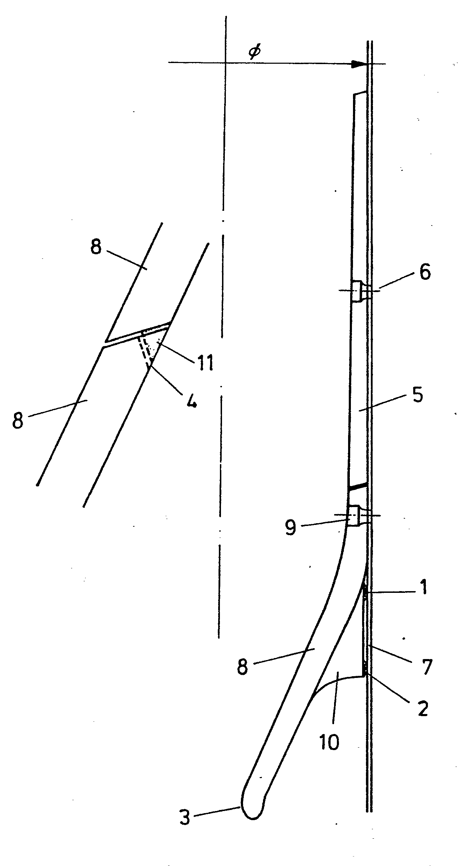

Beispielsweise Ausführungsformen der Erfindung sollen nun mit Bezug auf die Zeichnung näher erläutert werden, in deren rechtem Teil der Mantel eines Bergefallrohrs angedeutet ist, an dem die Auflageplatte einer Spiralrutsche und darüber eine Mantelschutzplatte hängt.

Links davon ist auf dem Blatt eine in Förderrichtung überlappende Fuge dargestellt.

Am Mantelrohr 7 ist über zwei Schrauben 9, von denen in der Zeichnung nur eine zu sehen ist, freihängend eine Hartgußwendelauflageplatte 8 angebracht, die im Bereich (der Darstellung) der Schraube 9 dem Stahlmantelrohr folgt und sich dann gegen das Innere zur Bildung eines Teils der Spiralrutsche fortkrümmt. Die Hartgußwendelauflageplatte läuft in ihrem unteren Bereich in einem Wendelauge 3 aus, das nach einer quadratischen Funktion, insbesondere parabelförmig, abgerundet ist. Angegossen an die Hartgußauflageplatte ist ein Fuß 10, der bei 2 Korrekturnocken trägt. Die Platte stützt sich mit dem Fuß, der sich etwa unter dem Ort der maximalen Belastung findet, gegen das Stahlmantelrohr ab. Toleranzen können durch Abschlagen oder Kürzen der in besonderer Weise gehärteten Nocken 2 ausgeglichen werden. Nach der Darstellung ist bei 1, d. h. im Bereich, in dem die Auflageplatte sich von der Stahlwandung abhebt, eine weitere Gruppe von Korrekturnocken angeordnet, die ebenfalls der Entlastung der Schraube 9, einer besseren Anlage und insbesondere der einfacheren Montage dienen. Die Verschleißschutzauflage besteht aus einer hochchromlegierten schlagzähen Legierung mit hohem Verschleißwiderstand. Der Übergangsbereich zwischen der Verschleißschutzplatte 8 und dem Stahlmantel 7 wurde durch einen entsprechenden Mantelschutz 5 (Platte), der ebenfalls am Stahlmantel angeschraubt wurde, geschützt.

Die Wendelauflageplatte 8 mit angegossenem Fuß 10 ist gehärtet und mit einer Vickershärte von mindestens 650 HV 30 angelassen. Im Bereich der vorstehenden Kante, die weniger auf Verschleiß als auf Schlag beansprucht ist, wird durch partielle Wärmebehandlung eine höhere Schlagfestigkeit zum Schutz gegen Bruch erreicht. Bei 4 auf der linken Seite der Figur ist die Querfuge der Wendelauflageplatten in Förderrichtung angedeutet. Die Fuge besitzt einen Zentriernocken 11. Sie ist überlappend ausgebildet. Dieser Zentriernocken 11 kann zur Auswechslung der Wendelauflageplatten 8 aufgrund der partiellen Härtung an der Soll-Bruchstelle abgeschlagen werden. Der Nocken geht nicht über die gesamte Breite der Fuge durch. Mehrere Nocken 11 können vorgesehen sein.

Die (nur in der Darstellung) untere Platte 8 trägt die Aussparung, die (nur in der Darstellung) obere Platte 8 trägt den Nocken 11.

## Patentansprüche

1. Spiralrutsche, insbesondere in einem Bergefallrohr, bestehend aus einzelnen Mantelrohrstücken (7) mit verschleißfester Auskleidung aus Hartgußwendelauflageplatten (8), gekennzeichnet durch Anbringung der Hartgußwendelauflageplatten (8) freihängend unmittelbar am Stahlmantelrohr (7).

2. Spiralrutsche nach Anspruch 1, dadurch gekennzeichnet, daß jede Hartgußwendelauflageplatte (8) mit wenigstens zwei Schrauben (9) befestigt ist.

3. Spiralrutsche nach Anspruch 2, dadurch gekennzeichnet, daß die Schrauben (9) oben an der Hartgußwendelauflageplatte freitragend außerhalb der Hauptverschleißzone gegen das Mantelrohr (7) verschraubt sind.

4. Spiralrutsche nach einem der vorhergehenden Ansprüche, dadurch gekennzeichnet, daß am Mantelrohr (7) oberhalb der jeweiligen Wendelauflageplatte (8) Mantelschutzplatten (5) aufgehängt sind.

5. Spiralrutsche nach einem der vorhergehenden Ansprüche, dadurch gekennzeichnet, daß die Hartgußwendelauflageplatten (8) einen mit entfernbaren bzw. in der Höhe korrigierbaren Korrekturnocken (2) versehenen angegossenen Fuß (10) zur Abstützung gegen das Stahlmantelrohr (7) aufweisen.

6. Spiralrutsche nach einem der vorhergehenden Ansprüche, dadurch gekennzeichnet, daß im Bereich zwischen Wendelauflageplatte (8) und Mantel (7) entfernbare Korrekturnocken (7) an der Auflageplatte (8) angeordnet sind.

7. Spiralrutsche nach einem der vorhergehenden Ansprüche, dadurch gekennzeichnet, daß die Korrekturnocken (1, 2) partiell gehärtet sind.

8. Spiralrutsche nach einem der vorhergehenden Ansprüche, dadurch gekennzeichnet, daß das Wendelauge (3) der Wendelauflageplatte (8) parabelförmig abgerundet ist.

9. Spiralrutsche nach einem der vorhergehenden Ansprüche, dadurch gekennzeichnet, daß im Bereich der überlappenden Querfuge (4) der Wendelauflageplatte (8) in Förderrichtung an der an der Stoßstelle unteren Platte Zentriernocken (11) angegossen sind.

10. Spiralrutsche nach einem der vorhergehenden Ansprüche, dadurch gekennzeichnet, daß die Hartgußwendelauflageplatten (8) samt Fuß (10) und Korrekturnocken (1, 2) aus hochchromlegiertem, schlagzähem Material mit hohem Verschleißwiderstand bestehen.

11. Spiralrutsche, insbesondere in einem Bergefallrohr, bestehend aus einzelnen Mantelrohrstücken (7) mit verschleißfester Auskleidung aus Hartgußwendelauflageplatten (8), dadurch gekennzeichnet, daß die Hartgußwendelauflageplatten (8) freihängend unmittelbar am Stahlmantelrohr (7) angeordnet sind, die Hartgußwendelauflageplatten (8) einen mit entfernbaren bzw. in der Höhe korrigierbaren Korrekturnocken (1; 2) versehenen angegossenen Fuß (10) zur Abstützen gegen das Stahlmantelrohr (7) aufweisen und daß im Bereich der überlappenden Querfuge (4) der Wendelauflageplatten (8) in Förderrichtung an der an der Stoßstelle unteren Platte Zentriernocken (11) angegossen sind, wobei die Zentriernocken (11) zur Auswechslung der Wendelauflageplatten (8) aufgrund der partiellen Härtung an der Sollbruchstelle abschlagbar sind.

**Claims**

1. Spiral chute, particularly in a refuse gravitation discharge tube, consisting of individual pipe sections (7) protecting the casing, providing for an abrasion resistant lining of alloyed white cast iron tiles for spiral chutes, characterized by arranging the alloyed white cast iron tiles (8) for the spiral chutes in a freely hanging manner immediately from the steel protective casing (7).

2. Spiral chute according to claim 1, characterized in that each alloyed white cast iron tile for spiral chutes (8) is fixed by al least two screws (9).

3. Spiral chute according to claim 2, characterized in that the screws (9) are screwed to the top of the alloyed white cast iron tiles (8) freely supported outside the main abrasion zone against the protection pipe casing (7).

4. Spiral chute according to one of the proceeding claims, characterized in that at the pipe casing (7) above the respective alloyed white cast iron tile (8) casing protective tiles (5) are suspended.

5. Spiral chute according to one of the proceeding claims, characterized in that the alloyed white cast iron tiles (8) provide for a foot arrangement (10) cast in one piece with the tiles and provided with a correction cam (2) correctable as to its height for supporting against the steel casing pipe (7).

6. Spiral pipe according to one of the proceeding claims, characterized in that in the region between the alloyd white cast iron tile (8) and the casing (7) removable correction cams (7) are arranged on the tile (8).

7. Spiral chute according to one of the proceeding claims, characterized in that the correction cams (1, 2) are partially hardened.

8. Spiral chute according to one of the proceeding claims, characterized in that the spiral chute lug (3) of the spiral chute tile (8) is rounded according to a parabola shape.

9. Spiral chute according to one of the proceeding claims, characterized in that in the region of the overlapping transverse joint (4) of the spiral tile (8), seen in conveying direction, at the joint position of the lower tile centering cams (11) are arranged cast in one piece with the tile.

10. Spiral chute according to one of the proceeding claims, characterized in that the alloyed white cast iron tiles (8) as well as the foot arrangement (10) and the correction cams (1, 2) consist of high chromium alloyed tough material providing for a high abrasion resistance.

11. Spiral chute, particularly in a refuse gravitation discharge tube, consisting of individual pipe casing sections (7) provided with an abrasion resistant lining of alloyed white cast iron tiles for spiral chutes (8), characterized in that the alloyed white cast iron tiles (8) are freely suspended immediateyl from the steel pipe casing (7); that the alloyed white cast iron tiles (8) provide for a foot arrangement (10) and that in the region of the overlapping transverse joint (4) of the alloyed white cast iron tiles (8) seen in conveying direction at the tile which is the lower one at the joint, centering cams (8) are provided cast integrally with the tile, the centering cams (11) for exchanging of the alloyed white cast iron tiles (8) because of their partial hardening at the rated breaking position can be knocked off.

**Revendications**

1. Convoyeur à rampe hélicoïdale, en particulier dans un tuyau à décharge de boue, se composant de morceaux de tuyau d'enveloppe (7) séparés avec une garniture résistante à l'usure formée de plaques de support hélicoïdales en fonte durcie (8), caractérisé par le montage des plaques de support hélicoïdales en fonte durcie (8) librement suspendues directement sur le tuyau d'enveloppe en acier (7).

2. Convoyeur à rampe hélicoïdale selon la revendication 1, caractérisé en ce que chaque plaque de support hélicoïdale en fonte durcie (8) est fixée à l'aide d'au moins deux vis (9).

3. Convoyeur à rampe hélicoïdale selon la revendication 2, caractérisé en ce que les vis (9), en haut au niveau de la plaque de support hélicoïdale en fonte durcie en porte à faux, sont vissées à l'extérieur de la zone de plus forte usure, sur le tuyau d'enveloppe (7).

4. Convoyeur à rampe hélicoïdale selon l'une des revendications précédentes, caractérisé en ce que sur le tuyau d'enveloppe (7) au-dessus de la plaque de support hélicoïdale (8) respective sont suspendues des plaques de protection d'enveloppe (5).

5. Convoyeur à rampe hélicoïdale selon l'une des revendications précédentes, caractérisé en ce que les plaques de support hélicoïdales en fonte durcie (8) sont munies d'un pied (10) venant de fonderie portant des cames correctrices (2) amovibles ou réglables en hauteur servant d'appui sur le tuyau d'enveloppe en acier (7).

6. Convoyeur à rampe hélicoïdale selon l'une des revendications précédentes, caractérisé en ce que dans la partie comprise entre la plaque de support hélicoïdale (8) et l'enveloppe (7) sont disposées sur la plaque de support (8) des cames correctrices amovibles (1, 2).

7. Convoyeur à rampe hélicoïdale selon l'une des revendications précédentes, caractérisé en ce que les cames correctrices (1, 2) sont partiellement trampées.

8. Convoyeur à rampe hélicoïdale selon l'une des revendications précédentes, caractérisé en ce que l'oeil d'hélice (3) de la plaque de support hélicoïdale (8) est arrondi en forme de parabole.

9. Convoyeur à rampe hélicoïdale selon l'une des revendications précédentes, caractérisé en ce qu'au niveau du joint transversal à recouvrement (4) de la plaque de support hélicoïdale (8) dans le sens du transport sont prévues des cames de centrage (11) formées par coulage sur la plaque qui est la plaque intérieure à l'emplacement du joint.

10. Convoyeur à rampe hélicoïdale selon l'une des revendications précédentes, caractérisé en ce que les plaques de support hélicoïdales en fonte durcie (8) avec le pied (10) et les cames correctrices (1, 2) sont formées d'une matière résiliente en alliage à haute teneur en chrome présentant une résistance à l'usure élevée.

11. Convoyeur à rampe hélicoïdale, en particulier dans un tuyau à déchargement de boue se composant de morceaux de tuyau d'enveloppe séparés (7) avec une garniture résistante à l'usure formée de plaques de support hélicoïdales en fonte durcie (8), caractérisé en ce que les plaques de support hélicoïdales en fonte durcie (8) sont disposées librement suspendues directement sur le tuyau d'enveloppe en acier (7), les plaques de support hélicoïdales en fonte durcie (8) comportent un pied (10) venant de fonderie muni de cames correctrices (1, 2) amovibles ou réglables en hauteur servant d'appui sur le tuyau d'enveloppe en acier (7) et en ce qu'au niveau du joint à recouvrement (4) des plaques de support hélicoïdales (8) dans le sens du transport sont prévues des cames de centrage (11) sur la plaque qui est la plaque inférieure à l'emplacement du joint, les cames de centrage (11) en raison de la trempe partielle au niveau de l'emplacement d'amorce de rupture pouvant être chassées pour permettre le remplacement des plaques de support hélicoïdales (8).